(19) Europäisches Patentamt
European Patent Office
Office européen des brevets

(11) **EP 1 220 464 B1**

(12) **FASCICULE DE BREVET EUROPEEN**

(45) Date de publication et mention
de la délivrance du brevet:
**08.08.2007 Bulletin 2007/32**

(51) Int Cl.:
***H04B 1/707*** *(2006.01)*     ***H04L 27/38*** *(2006.01)*

(21) Numéro de dépôt: **01403264.3**

(22) Date de dépôt: **13.12.2001**

(54) **Méthode accélérée de détection par sphères**

Beschleunigtes spherisches Detektionsverfahren

Accelerated spherical detection method

(84) Etats contractants désignés:
**AT BE CH CY DE DK ES FI FR GB GR IE IT LI LU MC NL PT SE TR**

(30) Priorité: **20.12.2000 FR 0017071**
               **22.12.2000 FR 0017255**

(43) Date de publication de la demande:
**03.07.2002 Bulletin 2002/27**

(73) Titulaire: **Mitsubishi Electric Information Technology Centre Europe B.V.**
**1119 NS Schiphol Rijk (NL)**

(72) Inventeur: **Brunel, Loic,**
**Mitsubsihi Electric ITE**
**35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
- **BRUNEL L ET AL: "Euclidean space lattice decoding for joint detection in CDMA systems" INFORMATION THEORY AND COMMUNICATIONS WORKSHOP, 1999. PROCEEDINGS OF THE 1999 IEEE KRUGER NATIONAL PARK, SOUTH AFRICA 20-25 JUNE 1999, PISCATAWAY, NJ, USA,IEEE, US, 20 juin 1999 (1999-06-20), page 129, XP002178306 ISBN: 0-7803-5268-8**
- **VITERBO E ET AL: "A universal lattice code decoder for fading channels" IEEE TRANSACTIONS ON INFORMATION THEORY, IEEE SERVICE CENTER, PISCATAWAY, NJ, US, vol. 45, no. 5, juillet 1999 (1999-07), pages 1639-1642, XP002178307 ISSN: 0018-9448**
- **FORNEY G D: "A BOUNDED-DISTANCE DECODING ALGORITHM FOR THE LEECH LATTICE, WITH GENERALIZATIONS" IEEE TRANSACTIONS ON INFORMATION THEORY, IEEE INC. NEW YORK, US, vol. 35, no. 4, 1 juillet 1989 (1989-07-01), pages 906-909, XP000100922 ISSN: 0018-9448**

## Description

La présente invention concerne une méthode et un dispositif de détection multi-utilisateur. Plus particulièrement, la présente invention concerne une méthode et un dispositif de détection multi-utilisateur à maximum de vraisemblance pour un système de télécommunication DS-CDMA *(Direct Séquence Code Division Multiple Access)*.

Dans un système de télécommunication mobile DS-CDMA, la séparation des communications en provenance ou à destination des différents utilisateurs est réalisée en multipliant chaque symbole complexe d'un utilisateur par une séquence d'étalement qui est propre à ce dernier, encore appelée pour cette raison signature de l'utilisateur. La fréquence d'étalement (chip rate) étant supérieure à la fréquence des symboles, le signal transmis par chaque utilisateur est distribué (ou étalé) dans l'espace des fréquences. Le rapport entre la bande occupée par le signal étalé et la bande occupée par le signal d'information est appelé facteur d'étalement. A la réception, la séparation d'un utilisateur donné est obtenue grâce à un filtrage adapté à la signature correspondante. Lorsque le canal de transmission présente une pluralité de trajets de propagation, la sortie du filtrage adapté comporte autant de pics de corrélation. Chaque trajet du canal peut être modélisé par un coefficient multiplicatif complexe et un retard. Les signaux s'étant propagés selon les différents trajets peuvent être alignés et combinés au moyen de coefficients complexes conjugués des coefficients de trajet, réalisant ainsi un filtrage adapté au canal de transmission. Pour simplifier la terminologie nous engloberons dans l'expression générale « filtrage adapté à l'utilisateur *k* » à la fois l'opération de filtrage adapté à la signature de l'utilisateur *k* et celle de filtrage adapté au canal de transmission.

Pour combattre l'interférence entre signaux à destination (liaison descendante) ou en provenance (liaison montante) des différents utilisateurs, il a été proposé des méthodes de détection multi-utilisateur et notamment des méthodes de détection itératives telles que celles connues sous le nom de PIC (*Parallel Interference Cancellation*) et SIC (*Serial Interférence Cancellation*). Elles sont fondées sur l'itération d'un cycle d'élimination des interférences comportant l'estimation des symboles émis, l'évaluation des interférences et leur soustraction des signaux reçus. Bien que performantes, ces méthodes ne sont pas optimales dans la mesure où elles ne fournissent pas une estimation au sens du maximum de vraisemblance des symboles transmis par les différents utilisateurs.

Une méthode de détection multi-utilisateur à maximum de vraisemblance inspirée de l'algorithme de Viterbi a été proposée par S. Verdu dans un article intitulé << Minimum probability of error for asynchronous Gaussian multiple access channels >> publié dans IEEE Transactions on Information Theory, pages 85-96, Janvier 1986 mais sa complexité est prohibitive car elle varie de manière exponentielle avec le nombre d'utilisateurs .

Plus récemment il a été proposé par L. Brunel et al., dans un article intitulé « Euclidian space lattice decoding for joint detection in CDMA system » publié dans Proceedings of ITW, page 129, Juin 1999 et par Viterbo E. et al., dans l'article "A Universel Lattice Code Decoder for Fading Channels", publié dans IEEE Transactions on Information Theory, page 1639, vol. 45, no. 5, July 1999, une méthode de détection multi-utilisateur à maximum de vraisemblance utilisant une représentation par réseau de points. Selon cette méthode on détermine un vecteur caractéristique du signal reçu représentant une statistique suffisante pour la détection au maximum de vraisemblance des symboles transmis par les différents utilisateurs. On montre sous certaines conditions que le vecteur caractéristique peut être représenté comme le point d'un réseau perturbé par un bruit. La détection consiste alors à rechercher le point du réseau le plus proche du point correspondant au vecteur reçu. Cependant, la dimension du réseau à utiliser étant en général de 2.*K* où *K* est le nombre d'utilisateurs le nombre de points à tester reste encore très élevé. Pour simplifier la détection, il a été proposé de limiter la recherche du plus proche voisin aux points du réseau appartenant à une sphère centrée autour du point reçu. Nous exposerons ci-après cette méthode de détection simplifiée dite << méthode de détection par sphères >> :

Nous nous plaçons dans le contexte d'un système de télécommunication mobile à accès multiple avec étalement de spectre par séquences directes (DS-CDMA) comprenant *K* utilisateurs communiquant de manière synchrone avec une station de base.

Soit $d_k(i)$ le symbole complexe émis par l'utilisateur *k* à l'instant *i*. Ce symbole appartient à la constellation de modulation $\mathbf{A_k}$ utilisée par l'utilisateur *k,* que l'on appellera encore alphabet de symboles de l'utilisateur *k*. Chaque utilisateur *k* transmet un bloc de *N* symboles avec une amplitude du signal $a_k$. Les symboles sont étalés par une signature complexe $s_k(t) = s_k^R(t) + j.s_k^I(t)$ de durée égale à la période symbole *T* :

$$s_k(t) = 0 \text{ si } t \notin \left[0,T\right[$$

Les $K$ symboles complexes $d_k(i)=d_k^R(i)+j.d_k^I(i)$ transmis à l'instant $i$ sont placés dans un vecteur ligne de valeurs réelles $\mathbf{d}_2(i)$ défini comme :

$$\mathbf{d}_2(i)=\left(d_1^R(i),d_1^I(i),\ldots,d_K^R(i),d_K^I(i)\right) \tag{1}$$

Le signal modulé correspondant est alors, en fonction du temps $t$ :

$$S_t=\sum_{i=0}^{N-1}\sum_{k=1}^{K}a_k d_k(i)s_k(t-iT) \tag{2}$$

Nous supposons que le canal est un canal idéal à bruit blanc additif gaussien. Soit $n=S_t+\eta_t$ le signal reçu au temps $t$ et $\eta_t$ un bruit gaussien complexe de moyenne nulle et dont les composantes ont une variance $N_0$.

Soit le vecteur ligne $\mathbf{y}_2(i)=\left(y_1^R(i),y_1^I(i),\ldots,y_K^R(i),y_K^I(i)\right)$ tel que $y_k(i)=y_k^R(i)+j.y_k^I(i)$ soit la sortie complexe à l'instant $i$ du filtre adapté à l'utilisateur $k$ :

$$y_k(i)\overset{\Delta}{=}\int_{-\infty}^{+\infty}s_k^*(t-iT)n\,dt$$

$$=\sum_{\ell=1}^{K}a_\ell d_\ell(i)\int_0^T s_\ell(t)s_k^*(t)\,dt+n_k(i) \tag{3}$$

$$=\sum_{\ell=1}^{K}a_\ell d_\ell(i)R_{\ell k}+n_k(i)$$

$$\text{avec } R_{\ell k}=\int_0^T s_\ell(t)s_k^*(t)\,dt=R_{\ell k}^R+j.R_{\ell k}^I \text{ pour } k,\ell=1,\ldots,K \text{ et } n_k(i)=\int_0^T \eta_t.s_k^*(t-i.T)\,dt$$

Nous noterons $\mathbf{R}(i)$ la matrice d'autocorrélation des séquences d'étalement.
Si l'on décompose les éléments complexes de (3) en leurs parties réelles et imaginaires, on obtient :

$$\left[y_k^R(i)+j.y_k^I(i)\right]=\sum_{\ell=1}^{K}a_\ell\left[b_\ell^R(i)R_{\ell k}^R-b_\ell^I(i)R_{\ell k}^I\right]+j.\sum_{\ell=1}^{K}a_\ell\left[b_\ell^R(i)R_{\ell k}^I+b_\ell^I(i)R_{\ell k}^R\right]+\left[n_k^R(i)+j.n_k^I(i)\right] \tag{4}$$

Soient $\mathbf{A}_2=\mathbf{Diag}(a_1,a_1,\ldots,a_K,a_K)$ et $\mathbf{R}_2$ la matrice de taille $2K\times 2K$ telle que:

$$\mathbf{R}_2=\begin{bmatrix} R_{11}^R & R_{11}^I & \cdots & R_{1K}^R & R_{1K}^I \\ -R_{11}^I & R_{11}^R & \cdots & -R_{1K}^I & R_{1K}^R \\ \vdots & \vdots & & \vdots & \vdots \\ R_{K1}^R & R_{K1}^I & \cdots & R_{KK}^R & R_{KK}^I \\ -R_{K1}^I & R_{K1}^R & \cdots & -R_{KK}^I & R_{KK}^R \end{bmatrix} \tag{5}$$

L'équation (4) peut alors se mettre sous forme matricielle :

$$\mathbf{y}_2(i)=\mathbf{d}_2(i)\mathbf{M}_2+\mathbf{n}_2(i) \tag{6}$$

où $\mathbf{M}_2$ est une matrice réelle de taille $2K \times 2K$ définie par $\mathbf{M}_2 = \mathbf{A}_2\mathbf{R}_2$ et où le vecteur de bruit $\mathbf{n}_2(i) = \left(n_1^R(i), n_1^I(i), \ldots, n_k^R(i), n_k^I(i)\right)$ a pour matrice de covariance $N_0\mathbf{R}_2$.

Nous démontrerons ci-après que $\mathbf{y}_2(i)$, tel que donné par l'équation (6), peut être représenté comme un point d'un réseau $\Lambda_2$ de dimension 2.K, de matrice génératrice $\mathbf{M}_2$ corrompu par un bruit $\mathbf{n}_2$.

Nous appellerons réseau réel de points $\Lambda$ de dimension $\kappa$ tout ensemble de vecteurs de $\mathbf{R}^\kappa$ vérifiant :

$$\mathbf{x} = b_1\mathbf{v}_1 + b_2\mathbf{v}_2 + \ldots + b_\kappa\mathbf{v}_\kappa \ \text{où} \ b_i \in \mathbf{Z}, \forall i = 1, \ldots, \kappa$$

$$\text{et où} \ \{\mathbf{v}_1, \mathbf{v}_2, \ldots, \mathbf{v}\kappa\} \ \text{est une base sur} \ \mathbf{R}^\kappa.$$

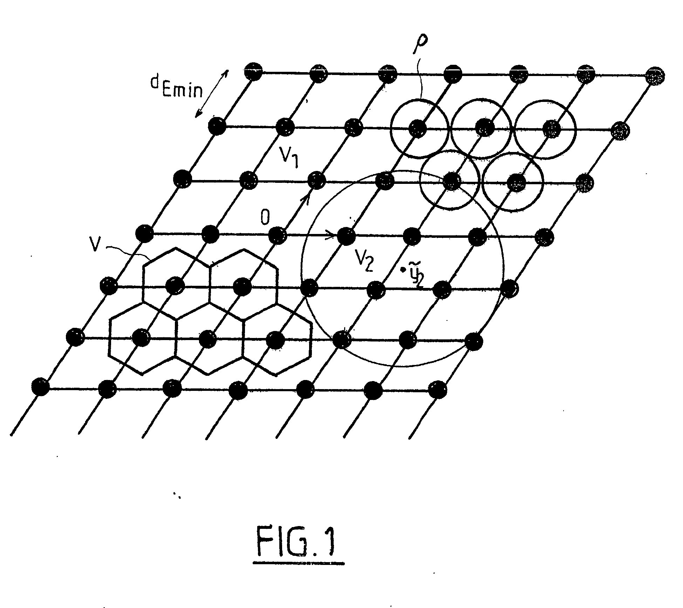

Un exemple de réseau de points de dimension 2 a été représenté en Fig. 1.

Les points du réseau forment un sous-groupe abélien additif de $\mathbf{R}^\kappa$, c'est d'ailleurs le plus petit sous-groupe de $\mathbf{R}^\kappa$ contenant les vecteurs $\{\mathbf{v}_1, \mathbf{v}_2, \ldots, \mathbf{v}_\kappa\}$ et un $\mathbf{Z}$-module de $\mathbf{R}^\kappa$. Ces vecteurs de base forment les lignes de la matrice génératrice $\mathbf{G}$ du réseau. On peut donc écrire $\mathbf{x} = \mathbf{bG}$ où $\mathbf{b} = (b_1, \ldots, b_\kappa) \in \mathbf{Z}^\kappa$. \hfill (7)

La région délimitée par les vecteurs de base est appelée parallélotope fondamental et son volume, noté vol $(\Lambda)$ ou det$(\Lambda)$, est nommé volume fondamental. Ce volume fondamental n'est autre que le module du produit vectoriel des $\kappa$ vecteurs de base et est donc égal à |det$(\mathbf{G})$| où det désigne le déterminant. S'il existe plusieurs choix possibles pour la matrice génératrice d'un même réseau, il n'existe par contre qu'une unique valeur pour le volume fondamental.

La région de Voronoï V ou cellule de Dirichlet d'un point $\mathbf{x}$ appartenant au réseau est l'ensemble des points de $\mathbf{R}^\kappa$ plus proches de $\mathbf{x}$ que de tout autre point du réseau. Le volume de cette région est égal au volume fondamental.

Le rayon d'empilement $\rho$ du réseau est le rayon de la plus grande sphère inscrite dans la région de Voronoï et le rayon de recouvrement celui de la plus petite sphère circonscrite à cette même région. Le rayon d'empilement est donc le rayon des sphères dont l'empilement constitue le réseau de points et le rayon de recouvrement est celui des sphères les plus petites qui, centrées sur les points du réseau, permettent de recouvrir tout l'espace $\mathbf{R}^\kappa$. La densité du réseau est le rapport entre le volume de la sphère de rayon $\rho$ et le volume fondamental. Enfin, le coefficient d'erreur (kissing number) $\tau(\Lambda)$ du réseau est le nombre de sphères tangentes à une même sphère dans l'empilement ou, en d'autres termes, le nombre de voisins d'un point du réseau, situés à la distance minimale $d_{Emin} = 2\rho$.

Considérons à nouveau l'équation (6). Les composantes du vecteur $\mathbf{d}_2(i)$ appartiennent à un alphabet fini $\mathbf{A}$ de cardinal :

$$Card(\mathbf{A}) = \prod_{k=1}^{K} Card(\mathbf{A}_k) \hfill (8)$$

Nous appellerons $\mathbf{A}$ la constellation du système (ou simplement constellation) par opposition aux $\mathbf{A}_k$ dites constellations de modulation.

Supposons par exemple que les composantes $d_k^R(i)$ et $d_k^I(i)$ soient des symboles de modulation PAM d'ordre M :

$$d_k^R(i) \in \{-M+1, -M+3, \ldots, M-3, M-1\} \ \text{et} \hfill (9)$$

et

$$d_k^I(i) \in \{-M+1, -M+3, \ldots, M-3, M-1\} \hfill (10)$$

Si l'on effectue la transformation :

$$d'^R_k(i) = \frac{1}{2}\left(d^R_k(i)+M-1\right) \text{ et } \quad d'^I_k(i) = \frac{1}{2}\left(d^I_k(i)+M-1\right) \text{ soit encore de manière vectorielle :}$$

$$\mathbf{d'}_2(i) = \frac{1}{2}\left(\mathbf{d}_2(i)+\mathbf{v}_M\right) \tag{11}$$

où $\mathbf{v}_M = (M\text{-}1, M\text{-}1, .., M\text{-}1)$

les composantes $d'^R_k(i)$ et $d'^I_k(i)$ sont des éléments de $\mathbf{Z}$ et par suite $\mathbf{d'}_2(i)$ est un vecteur de $\mathbf{Z}^{2K}$.

De manière générale, s'il existe une transformation affine transformant les composantes $d^R_k(i)$ $d^I_k(i)$ en des éléments de $\mathbf{Z}$, on peut représenter le vecteur $\mathbf{d'}_2(i)$ par un vecteur de $\mathbf{Z}^{2K}$.

De manière similaire, on effectue la transformation correspondante sur $\mathbf{y}_2(i)$, c'est-à-dire :

$$\mathbf{y'}_2(i) = \frac{1}{2}\left(\mathbf{y}_2(i)+\mathbf{v}_M \mathbf{M}_2\right) \tag{12}$$

Moyennant cette transformation, que nous supposerons implicite dans la suite, le vecteur $\mathbf{d}_2(i)\mathbf{M}_2(i)$ appartient alors à un réseau de points $\Lambda_2$ de dimension $2.K$ tel que défini par la relation (7) avec $\mathbf{G}=\mathbf{M}_2(i)$. Le vecteur $\mathbf{y}_2(i)$ peut donc être considéré comme un point du réseau $\Lambda_2$ corrompu par un bruit $\mathbf{n}_2(i)$.

Si l'on suppose que les composantes du vecteur de bruit $\mathbf{n}_2(i)$ sont des variables aléatoires indépendantes gaussiennes centrées, le problème de la détection au sens du maximum de vraisemblance des symboles émis par les différents utilisateurs se ramène à la recherche du point $z_2$ du réseau $\Lambda_2$ tel que sa distance à $\mathbf{y_2}(i)$ soit minimale.

En réalité, les composantes du vecteur de bruit $\mathbf{n_2}(i)$ sont corrélées et la matrice de covariance de $\mathbf{n_2}(i)$ est $N_0\mathbf{R}_2$.

Afin de se ramener au cas décorrélé il faut effectuer préalablement au décodage une opération de blanchiment du bruit.

La matrice $\mathbf{R}$ étant hermitienne, la matrice d'autocorrélation $\mathbf{R_2}$ est symétrique définie positive et peut donc faire l'objet d'une factorisation de Cholesky :

$$\mathbf{R}_2 = \mathbf{W}_2 \mathbf{W}_2^T \tag{13}$$

où $\mathbf{W}_2$ est une matrice triangulaire inférieure de taille $2K$x$2K$.

On définit un vecteur d'observation blanchie :

$$\widetilde{\mathbf{y}}_2(i) = \mathbf{y}_2(i)\mathbf{W}_2^{T^{-1}} \tag{14}$$

ainsi qu'un nouveau réseau de points $\Omega_2$ constitué des vecteurs de composantes $\left(\widetilde{x}_1^R(i), \widetilde{x}_1^I(i), .., \widetilde{x}_k^R(i), \widetilde{x}_k^I(i)\right)$ avec

$\widetilde{\mathbf{x}}_2(i) = \mathbf{x}_2(i)\mathbf{W}_2^{T^{-1}}$ où $\mathbf{x}_2(i)$ est un vecteur de composantes appartenant à $\Lambda_2$. Le réseau $\Omega_2$ a pour matrice génératrice $\mathbf{A}_2\mathbf{W}_2$, matrice réelle triangulaire inférieure.

On peut facilement montrer, qu'après blanchiment, la matrice de covariance du bruit filtré $\mathbf{n}_2(i)\mathbf{W}_2^{T^{-1}}$ est égale à $N_0\mathbf{I}_{2K}$ où $\mathbf{I}_{2K}$ est la matrice identité de dimension $2K$. La détection comprend donc une première étape de blanchiment du vecteur d'observation suivie d'une étape de recherche du plus proche voisin au sein du réseau de points $\Omega_2$.

Pour réduire le nombre de points à tester, comme illustré en Fig. 1, on peut limiter la recherche à une sphère centrée autour du point $\widetilde{y}_2$. En pratique, le choix du rayon de la sphère résulte d'un compromis : il ne doit pas être trop grand pour ne pas conduire à un nombre de points trop élevé et suffisamment grand pour inclure au moins le plus proche voisin.

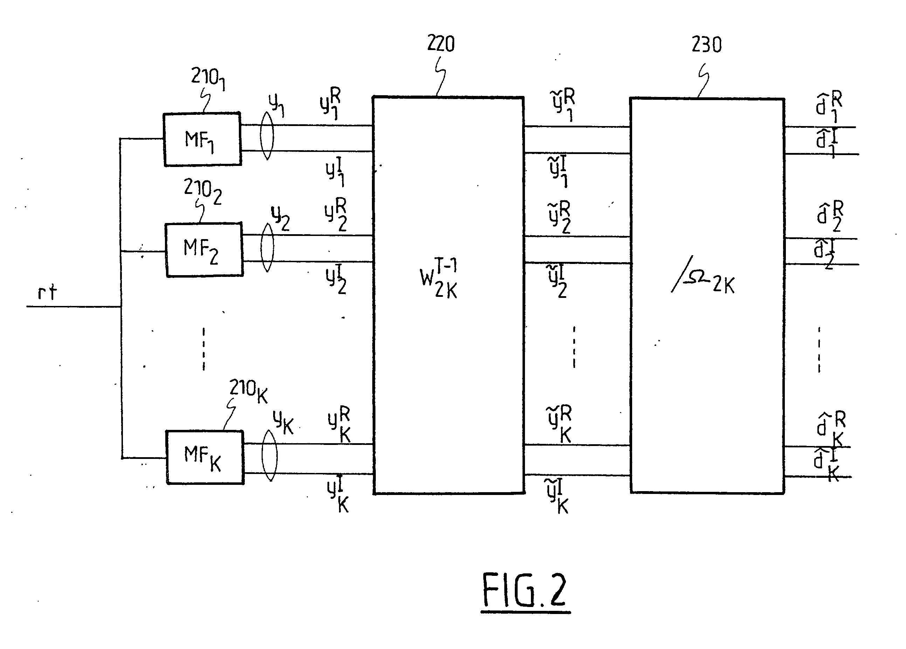

La Fig. 2 représente schématiquement un dispositif de détection multi-utilisateur utilisant une méthode de détection par sphères. Le signal reçu $n$ est filtré par une batterie de filtres adaptés à chacun des utilisateurs, $210_1$,..., $210_K$. Les composantes réelles et imaginaires du vecteur d'observation $\mathbf{y_2}(i)$ en sortie des filtres adaptés sont transmises à une unité de calcul matriciel effectuant l'opération de blanchiment spectral selon la relation (14). Les composantes réelles et imaginaires du vecteur blanchi $\tilde{\mathbf{y}}_2(i)$ sont ensuite transmises à une unité de détection par sphères recherchant le plus proche voisin du point reçu au sein du réseau $\Omega_2$ de dimension $2.K$. Les coordonnées du plus proche voisin donnent directement les composantes réelles et imaginaires des symboles estimés $\hat{d}_k(i)$ pour les différents utilisateurs.

L'étape de la recherche du plus proche voisin est gourmande en temps de calcul ce qui peut s'avérer très pénalisant lorsque le nombre d'utilisateurs est élevé.

Le but de la présente invention est de proposer une simplification de la méthode de détection par sphères.

A cette fin, l'invention est définie par une méthode de détection d'une pluralité de symboles ($\mathbf{d}_K(i)$) transmis par ou pour une pluralité $K$ d'utilisateurs, chaque symbole appartenant à une constellation de modulation et faisant l'objet d'un étalement spectral par une séquence d'étalement, ladite méthode comprenant une étape de filtrage adapté pour fournir un vecteur réel ($\mathbf{z}$) caractéristique dudit signal reçu, au moins le plus proche voisin dudit vecteur étant recherché au sein d'un réseau de points ($\Xi$) généré par lesdites constellations de modulation, ladite recherche étant limitée à des vecteurs candidats ($\mathbf{x}$) dont chacune des composantes ($b_i$) possède une valeur comprise dans un intervalle de recherche défini par une borne inférieure ($B_i^-$) et une borne supérieure ($B_i^+$), lesdites bornes étant choisies de manière à ce que chacun desdits intervalles ne comprenne que des valeurs de composantes de points situés à l'intérieur d'une sphère de rayon ($\sqrt{C}$) prédéterminé et appartenant à une constellation de modulation.

Avantageusement, pour une composante d'indice $i$ donné, chaque couple de bornes inférieure ($B_i^-$) et supérieure ($B_i^+$) est calculé à partir d'une grandeur $T_i$ caractéristique de la largeur de l'intervalle de recherche pour ladite composante. Cette grandeur caractéristique est déterminée par récurrence sur l'indice $i$ : la grandeur caractéristique ($T_i$) pour un indice donné est déterminée à partir de la grandeur d'indice précédent ($T_{i+1}$) et de la valeur d'une composante ($b_{i+1}$) choisie dans l'intervalle de recherche ($[B_{i+1}^-, B_{i+1}^+]$) relatif à la composante d'indice précédent.

Pour une composante de vecteur candidat d'indice *(2k)* donné, la borne inférieure de l'intervalle de recherche sera avantageusement choisie supérieure au plus petit entier ($M_{2k}^-$) correspondant à un symbole de la constellation de modulation ($\mathbf{A}_k$) et la borne supérieure de l'intervalle de recherche sera choisie inférieure au plus grand entier ($M_{2k}^+$) correspondant à un symbole de la constellation de modulation.

Pour une première composante de vecteur candidat d'indice (2k-1) donné, la borne inférieure de l'intervalle de recherche sera choisie supérieure à un premier entier ($M_{2k-1}^-$) et la borne supérieure de l'intervalle de recherche sera choisie inférieure à un second entier ($M_{2k-1}^+$), lesdits premier et second entiers étant déterminés à partir de la valeur d'une seconde composante ($b_{2k}$) du vecteur candidat telle que la première et la seconde composantes soient relatives à un même utilisateur.

Avantageusement, lesdits premier et second entiers sont respectivement déterminés comme la plus petite valeur et la plus grande valeur de la première composante telle que le nombre complexe défini par la valeur de ladite première composante et la valeur de ladite seconde composante est un symbole de la constellation de modulation dudit utilisateur.

La recherche du plus proche voisin est préférablement effectuée en balayant un à un lesdits intervalles de recherche pour les différents indices (i) de composante et en choisissant dans chacun desdits intervalles une valeur de composante ($b_i$), les bornes de chaque intervalle étant déterminées en fonction de la largeur de l'intervalle d'indice précédent ($i+1$) et de la valeur de composante ($b_{i+1}$) choisie dans ce même intervalle.

Selon un mode de réalisation, si, au cours de ladite recherche, la norme ($\|\mathbf{w}\|$) d'un vecteur candidat est inférieure au rayon de ladite sphère, le rayon est mis à jour à la valeur de ladite norme.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente un réseau de points utile à la méthode de détection employée dans le récepteur illustré en Fig. 2;
La Fig. 2 représente de manière schématique la structure d'un récepteur DS-CDMA multi-utilisateur utilisant une méthode de détection par sphères;

La Fig. 3 représente un organigramme de la recherche du plus proche voisin utilisée dans la méthode de détection par sphères selon l'invention.

La Fig. 4 représente un exemple de constellation de modulation d'un utilisateur.

Considérons à nouveau un système de télécommunication DS-CDMA avec $K$ utilisateurs fonctionnant en mode synchrone. Comme on l'a vu plus haut, la détection des symboles transmis par les différents utilisateurs au sens du maximum de vraisemblance peut se ramener à la recherche parmi les points d'un réseau ($\Omega_2$) du plus proche voisin du point correspondant au signal reçu.

Dans le cas où les séquences d'étalement sont réelles ou plus généralement multiples réelles d'un même nombre complexe, on peut montrer que la recherche peut être effectuée dans un réseau de dimension réduite à $K$. En effet, les termes imaginaires de la matrice $\mathbf{R}_2$ et par suite de la matrice $\mathbf{M}_2(i)$ étant nuls, on peut se ramener à un réseau de points réel $\Lambda$ de dimension $K$ et de matrice génératrice $\mathbf{M}(i)$ :

$$\mathbf{y}^R(i)=\mathbf{d}^R(i)\mathbf{M}(i)+\mathbf{n}^R(i) \tag{15}$$

$$\mathbf{y}^I(i)=\mathbf{d}^I(i)\mathbf{M}(i)+\mathbf{n}^I(i) \tag{16}$$

où $\mathbf{y}^R(i),\mathbf{d}^R(i),\mathbf{n}^R(i)$ (resp. $\mathbf{y}^I(i),\mathbf{d}^I(i),\mathbf{n}^I(i)$) sont les vecteurs constitués des parties réelles (resp. des parties imaginaires) des composantes de $\mathbf{y}(i),\mathbf{d}(i),\mathbf{n}(i)$ ;

$\mathbf{M}(i)=\mathbf{A}\mathbf{R}(i)$ où $\mathbf{R}(i)$ est la matrice constituée par les coefficients $R_{\ell k}=\int_0^T s_\ell(t)s_k(t)\mathrm{d}t$ et $\mathbf{A}$ est le vecteur des amplitudes des $K$ utilisateurs. Les vecteurs d'observation $\mathbf{y}^R(i)$ et $\mathbf{y}^I(i)$ appartiennent à $\mathbf{R}^K$. Après transformation éventuelle selon une relation du type de celle de (12), les vecteurs $\mathbf{y}^R(i)$ et $\mathbf{y}^I(i)$ peuvent être considérés comme des points d'un réseau $\Lambda$ de matrice génératrice $\mathbf{M}(i)$ corrompus par du bruit.

On montre aisément que les vecteurs de bruit $\mathbf{n}^R(i)$ et $\mathbf{n}^I(i)$ ont tous deux pour matrice de covariance $N_0.\mathbf{R}(i)$. $\mathbf{R}(i)$ étant une matrice symétrique définie positive on peut la factoriser selon une décomposition de Cholesky : $\mathbf{R} = \mathbf{W}\mathbf{W}^T$ où $\mathbf{W}$ est une matrice réelle triangulaire inférieure de taille $K$x$K$. Afin de décorréler les composantes de bruit, les vecteurs d'observation réels $\mathbf{y}^R(i)$ et $\mathbf{y}^I(i)$ sont tout d'abord soumis à une opération de blanchiment :

$$\widetilde{\mathbf{y}}^R(i)=\mathbf{y}^R(i)\mathbf{W}^{T^{-1}} \tag{17}$$

$$\widetilde{\mathbf{y}}^I(i)=\mathbf{y}^I(i)\mathbf{W}^{T^{-1}} \tag{18}$$

Dans un deuxième temps, on recherche les plus proches voisins des vecteurs $\widetilde{\mathbf{y}}^R(i)$ et $\widetilde{\mathbf{y}}^I(i)$ appartenant au réseau de points $\Omega$ constitué des vecteurs $\widetilde{\mathbf{x}}(i)=\mathbf{x}(i)\mathbf{W}^{T-1}$ où $\mathbf{x}(i)$ appartient à $\Lambda$. On notera que la matrice génératrice du réseau Q est égale à $\mathbf{A}\mathbf{W},$ matrice réelle triangulaire inférieure. D'autre part, on peut montrer facilement, qu'après blanchiment, les matrices de covariance des bruits filtrés $\mathbf{n}^R(i)\mathbf{W}^{T-1}$ et $\mathbf{n}^I(i)\mathbf{W}^{T-1}$ sont toutes deux égales à $N_0\mathbf{I}_K$ où $\mathbf{I}_K$ est la matrice identité de dimension $K.$

Lorsque les symboles de ou pour les utilisateurs sont transmis de manière asynchrone, la modélisation du système est plus complexe car il faut tenir compte du fait qu'un symbole d'un utilisateur peut interférer avec deux voire plusieurs symboles consécutifs d'un autre utilisateur. On montre dans ce cas que l'on peut se ramener à une recherche du plus proche voisin au sein d'un réseau de dimension 2.$K'$ *(K' dans* le cas de signatures réelles) avec $K'$>$K$ où $K'$ est fonction du nombre de symboles non encore estimés pouvant interférer entre eux. La détection n'est toutefois pas optimale au sens du maximum de vraisemblance.

Dans tous les cas, le problème est de déterminer le point $\mathbf{x}$ d'un réseau $\Xi$ de dimension $\kappa$ le plus proche du vecteur reçu et blanchi $\widetilde{\mathbf{y}}$, ce qui revient à minimiser la métrique

$$m(\widetilde{\mathbf{y}}/\mathbf{x})=\sum_{i=1}^{\kappa}|\widetilde{y}_i-x_i|^2=\|\widetilde{\mathbf{y}}-\mathbf{x}\|^2 \qquad (19)$$

où $\widetilde{y}=\mathbf{x}+\eta$, $\eta=(\eta_1,...,\eta_\kappa)$ est le vecteur de bruit et $\mathbf{x}=(x_1,...,x_\kappa)$ est un point appartenant au réseau. Le vecteur de bruit $\eta$ a des composantes réelles indépendantes suivant une distribution gaussienne de moyenne nulle et de variance.

On notera que le vecteur y(i) n'a pas besoin d'être blanchi si l'on utilise une métrique basée sur la matrice de covariance :

$$m(\mathbf{y}/\mathbf{x})=(\mathbf{y}-\mathbf{x})\mathbf{R}^{-1}(\mathbf{y}-\mathbf{x})^T \qquad (20)$$

On désignera par la suite, pour des raisons de simplification, $\mathbf{z}$ le vecteur d'observation blanchi ($\widetilde{y}(i)$) ou non ($\mathbf{y}(i)$) et $\|.\|$ la métrique intervenant dans la relation (19) ou (20).

Les points du réseau $\Xi$ peuvent être décrit par les vecteurs $\mathbf{x}=\mathbf{bG}$ où $\mathbf{b}=(b_1,...,b_\kappa)$ possède des composantes $b_t$ appartenant à l'anneau des entiers $\mathbf{Z}$ et où $\mathbf{G}$ est la matrice génératrice du réseau. On note $\{\mathbf{v}_1,\mathbf{v}_2,...,\mathbf{v}_\kappa\}$ les lignes de la matrice $\mathbf{G}.$ Par définition ces vecteurs forment une base du réseau.

L'ensemble des symboles émis est limité à un alphabet de taille finie $\mathbf{A}_\kappa \subset \mathbf{Z}^\kappa$ appelé constellation. Cette constellation est déterminée par les constellations de modulation utilisées par (ou pour) les $\kappa$ utilisateurs et le cardinal de l'alphabet $\mathbf{A}_\kappa$ est le produit des cardinaux des différents alphabets de modulation. On supposera que les points complexes de chacune de ces constellations possèdent des valeurs réelles et des valeurs complexes régulièrement réparties .

Comme on l'a vu un décodage exhaustif nécessiterait une recherche du plus proche voisin dans la totalité de $\mathbf{A}_\kappa$. Le décodeur restreint avantageusement son calcul aux points qui sont situés à l'intérieur d'une zone de la constellation située autour du point reçu, préférentiellement à l'intérieur d'une sphère de rayon donné $\sqrt{C}$ centrée sur le point reçu comme représenté en Fig. 1. Seuls les points du réseau situés à une distance quadratique inférieure à C du point reçu sont donc considérés pour la minimisation de la métrique (19).

En pratique, le décodeur effectue la minimisation suivante :

$$\min_{\mathbf{x}\in\Xi}\|\mathbf{z}-\mathbf{x}\|=\min_{\mathbf{w}\in z-\Xi}\|\mathbf{w}\| \qquad (20)$$

Pour ce faire, le décodeur recherche le plus petit vecteur $\mathbf{w}$ dans l'ensemble translaté $\mathbf{z}-\Xi$. On peut exprimer les vecteurs $\mathbf{z}$ et $\mathbf{w}$ comme :

$$\mathbf{z}=\rho\mathbf{G} \qquad \text{avec} \qquad \rho=(\rho_1,...,\rho_\kappa)$$
$$\mathbf{w}=\xi\mathbf{G} \qquad \text{avec} \qquad \xi=(\xi_1,...,\xi_\kappa) \qquad (21)$$

Il est important de noter que $\rho$ et $\xi$ sont des vecteurs réels. Comme $\mathbf{w}=\mathbf{z}-\mathbf{x}$ où $\mathbf{x}$ appartient au réseau $\Xi$, on a la relation $\xi_i = \rho_i - b_i$ pour $i=1,...,\kappa$ avec $\mathbf{w}=\sum_{i=1}^{\kappa}\xi_i\mathbf{v}_i$ .

Le vecteur $\mathbf{w}$ est un point du réseau dont les coordonnées $\xi_i$ sont exprimées dans le repère translaté centré sur le point reçu $\mathbf{y}.$ Le vecteur $\mathbf{w}$ appartient à une sphère de rayon quadratique $C$ centrée en $\mathbf{0}$ si :

$$\|\mathbf{w}\|^2=Q(\xi)=\xi\mathbf{G}\mathbf{G}^T\xi^T \le C \qquad (22)$$

Dans le nouveau système de coordonnées défini par $\xi$, la sphère de rayon quadratique $C$ centrée en $\mathbf{y}$ est donc transformée en une ellipse centrée à l'origine. La factorisation de Cholesky de la matrice de Gram $\Gamma=\mathbf{GG}^T$ donne $\Gamma=\Delta\Delta^T$, où $\Delta$ est une matrice triangulaire inférieure d'éléments $\delta_{ij}.$

Il faut noter que si le vecteur **y** a été blanchi, il n'y a pas lieu d'effectuer cette factorisation car la matrice génératrice du réseau est déjà triangulaire inférieure.

Toutefois, dans le cas où l'on n'a pas procédé au blanchiment préalable et donc où la décomposition de Cholesky est nécessaire :

$$Q(\xi)=\xi\Delta\Delta^T\xi^T=\left\|\Delta^T\xi^T\right\|^2=\sum_{i=1}^{\kappa}\left(\delta_{ii}\xi_i+\sum_{j=i+1}^{\kappa}\delta_{ji}\xi_j\right)^2\leq C \tag{23}$$

En posant

$$q_{ii}=\delta_{ii}^2 \text{ pour } i=1,\ldots,\kappa$$
$$q_{ij}=\frac{\delta_{ij}}{\delta_{jj}} \text{ pour } j=1,\ldots,\kappa; i=j+1,\ldots,\kappa \tag{24}$$

on obtient

$$Q(\xi)=\sum_{i=1}^{\kappa}q_{ii}\left(\xi_i+\sum_{j=i+1}^{\kappa}q_{ji}\xi_j\right)^2 \tag{25}$$

En s'intéressant tout d'abord à la plage de variations possibles de $\xi_\kappa$, puis en rajoutant une à une les composantes, on obtient les $\kappa$ inégalités suivantes, qui définissent tous les points à l'intérieur de l'ellipse :

$$q_{\kappa\kappa}\xi_\kappa^2\leq C$$
$$q_{\kappa-1,\kappa-1}\left(\xi_{\kappa-1}+q_{\kappa,\kappa-1}\xi_\kappa\right)^2+q_{\kappa\kappa}\xi_\kappa^2\leq C \tag{26}$$
$$\forall \ell\in\{1;\kappa\}, \sum_{i=\ell}^{\kappa}q_{ii}\left(\xi_i+\sum_{j=i+1}^{\kappa}q_{ji}\xi_j\right)^2\leq C$$

On peut montrer que les inégalités (26) imposent aux composantes entières de b de satisfaire à :

$$\left\lceil-\sqrt{\frac{C}{q_{\kappa\kappa}}}+\rho_\kappa\right\rceil\leq b_\kappa\leq\left\lfloor\sqrt{\frac{C}{q_{\kappa\kappa}}}+\rho_\kappa\right\rfloor$$

$$\left\lceil-\sqrt{\frac{C-q_{\kappa\kappa}\xi_\kappa^2}{q_{\kappa-1,\kappa-1}}}+\rho_{\kappa-1}+q_{\kappa,\kappa-1}\xi_\kappa\right\rceil\leq b_{\kappa-1}\leq\left\lfloor-\sqrt{\frac{C-q_{\kappa\kappa}\xi_\kappa^2}{q_{\kappa-1,\kappa-1}}}+\rho_{\kappa-1}+q_{\kappa,\kappa-1}\xi_\kappa\right\rfloor$$

$$\left\lceil-\sqrt{\frac{1}{q_{ii}}\left(C-\sum_{\ell=i+1}^{\kappa}q_{\ell\ell}\left(\xi_\ell+\sum_{j=\ell+1}^{\kappa}q_{j\ell}\xi_j\right)^2\right)}+\rho_i+\sum_{j=i+1}^{\kappa}q_{ji}\xi_j\right\rceil\leq b_i \tag{27}$$

$$b_i\leq\left\lfloor\sqrt{\frac{1}{q_{ii}}\left(C-\sum_{\ell=i+1}^{\kappa}q_{\ell\ell}\left(\xi_\ell+\sum_{j=\ell+1}^{\kappa}q_{j\ell}\xi_j\right)^2\right)}+\rho_i+\sum_{j=i+1}^{\kappa}q_{ji}\xi_j\right\rfloor$$

où $\lceil x\rceil$ est le plus petit entier supérieur au réel $x$ et $\lfloor x\rfloor$ est le plus grand entier inférieur au réel $x$.

Le décodeur possède $\kappa$ compteurs internes, à savoir un compteur par dimension, chaque compteur comptant entre une borne inférieure et supérieure comme indiqué en (27), étant entendu qu'à chaque compteur est associé un couple de bornes particulier. En pratique ces bornes peuvent être mises à jour de manière récursive. On pose :

$$S_i = S_i(\xi_{i+1}, \ldots, \xi_K) = \rho_i + \sum_{j=i+1}^{K} q_{ji} \xi_j \tag{28}$$

$$T_{i-1} = T_{i-1}(\xi_i, \ldots, \xi_K) = C - \sum_{\ell=i}^{K} q_{\ell\ell} \left( \xi_\ell + \sum_{j=\ell+1}^{K} q_{j\ell} \xi_j \right)^2 = T_i - q_{ii}(\xi_i + S_i - \rho_i)^2 \tag{29}$$

$$T_{i-1} = T_i - q_{ii}(S_i - b_i)^2 \tag{30}$$

avec $T_K = C$

A l'aide des équations (28) à (30), on détermine récursivement la plage de variation de chaque composante $b_i$ en commençant par la composante $b_K$ :

$$L_i^- \leq b_i \leq L_i^+ \tag{31}$$

avec

$$\text{avec } L_i^- = \left\lceil -\sqrt{\frac{T_i}{q_{ii}}} + S_i \right\rceil \text{ et } L_i^+ = \left\lfloor \sqrt{\frac{T_i}{q_{ii}}} + S_i \right\rfloor \tag{32}$$

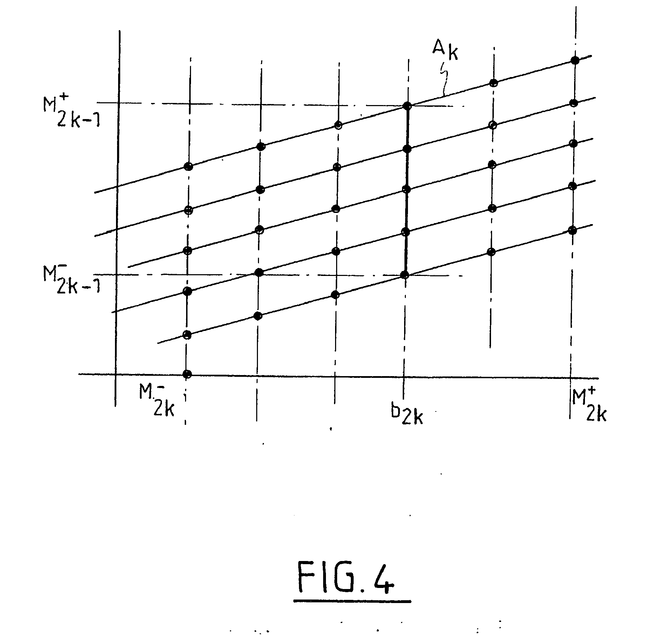

On restreint avantageusement les plages de variation définies par (32) de manière à ne pas tester inutilement des points qui sont situés hors de la constellation. On rappelle que chaque utilisateur $k$ utilise une constellation de symboles $A_k$, chaque symbole de la constellation étant un nombre complexe dont les parties réelle et imaginaire (éventuellement après transformation affine) sont des éléments de **Z**. Plaçons nous tout d'abord dans le cas général où le réseau est de dimension $2K$, où $K$ est le nombre d'utilisateurs. Pour chaque utilisateur $k$, on considère les dimensions $2k$ et $2k$-1 portant le symbole complexe transmis par ou pour l'utilisateur $k$. Comme indiqué en Fig. 4, la constellation, ou de manière équivalente la constellation de modulation de l'utilisateur $k$ est tout d'abord projetée sur la dimension $2k$.

Cette projection définit un intervalle $\left[M_{2k}^-, M_{2k}^+\right]$. On définit alors l'intervalle de recherche $[B_{2k}^-, B_{2k}^+]$ où :

$$B_{2k}^- = Sup(L_{2k}^-, M_{2k}^-) \text{ et } B_{2k}^+ = Inf(L_{2k}^+, M_{2k}^+) \tag{33}$$

, et l'on choisit un entier $b_{2k}$ dans cet intervalle. La composante $b_{2k}$ définit alors un intervalle $[M_{2k-1}^-, M_{2k-1}^+]$ pour la composante $b_{2k-1}$ comme indiqué sur la Fig. 4. On définit ensuite un intervalle de recherche $[B_{2k-1}^-, B_{2k-1}^+]$ par :

$$B_{2k-1}^- = Sup(L_{2k-1}^-, M_{2k-1}^-) \text{ et } B_{2k-1}^+ = Inf(L_{2k-1}^+, M_{2k-1}^+) \tag{33'}$$

En procédant de la sorte on est assuré de ne rechercher le plus proche voisin que parmi des candidats qui sont à la fois situés dans la sphère de recherche et des points de la constellation.

La situation est légèrement différente lorsque l'on utilise des séquences d'étalement réelles et donc lorsque le réseau de dimension *K* (où *K* est le nombre d'utilisateurs). Dans ce cas, les valeurs réelle et imaginaire des symboles font l'objet de recherches parallèles dans un réseau (Λ, Ω) de dimension *K*. Le calcul des bornes de recherche (et le choix des valeurs des valeurs des composantes) porte tour à tour sur la partie réelle et la partie imaginaire, de manière entrelacée.

Dans l'exemple simple où la modulation employée sur une dimension *i* est une modulation PAM d'ordre *M,* la coordonnée entière $b_i$ du point recherché doit être comprise entre 0 et *M*-1. Les bornes de recherche sont ajustées par

$$B_i^- = Sup(L_i^-, 0) \text{ et } B_i^+ = Inf(L_i^+, M-1)$$ ,de manière à ce que le compteur associé à la composante $b_i$ ne parcoure pas des points qui sont situés en dehors de la sphère de recherche ou en dehors de la constellation. Cet ajustement des bornes de recherche permet d'accélérer considérablement l'algorithme de détection par sphères.

De plus, la recherche à l'intérieur de la sphère peut être encore accélérée en mettant à jour le rayon $\sqrt{C}$ avec la dernière norme euclidienne calculée $\|\mathbf{w}\|$.

La valeur initiale du rayon de recherche $\sqrt{C}$ doit être choisie de manière appropriée. En effet, le nombre de points du réseau situés à l'intérieur de la sphère de décodage augmente avec *C*. C'est pourquoi le choix d'une grande valeur de *C* pénalise l'algorithme de décodage tandis que la sphère de recherche peut être vide si *C* est trop faible.

De manière à être sûr que le décodeur trouve au moins un point du réseau, on choisit avantageusement un rayon de recherche supérieur au rayon de recouvrement du réseau. On peut par exemple le prendre égal à la borne supérieure de Rogers :

$$\sqrt{C}^\kappa = \left(\kappa\log\kappa + \kappa\log\log\kappa + 5\kappa\right) \times \frac{|\det(\mathbf{G})|}{V_\kappa} \tag{34}$$

où $V_\kappa$ est le volume d'une sphère de rayon unité dans l'espace réel $\mathbf{R}^\kappa$.

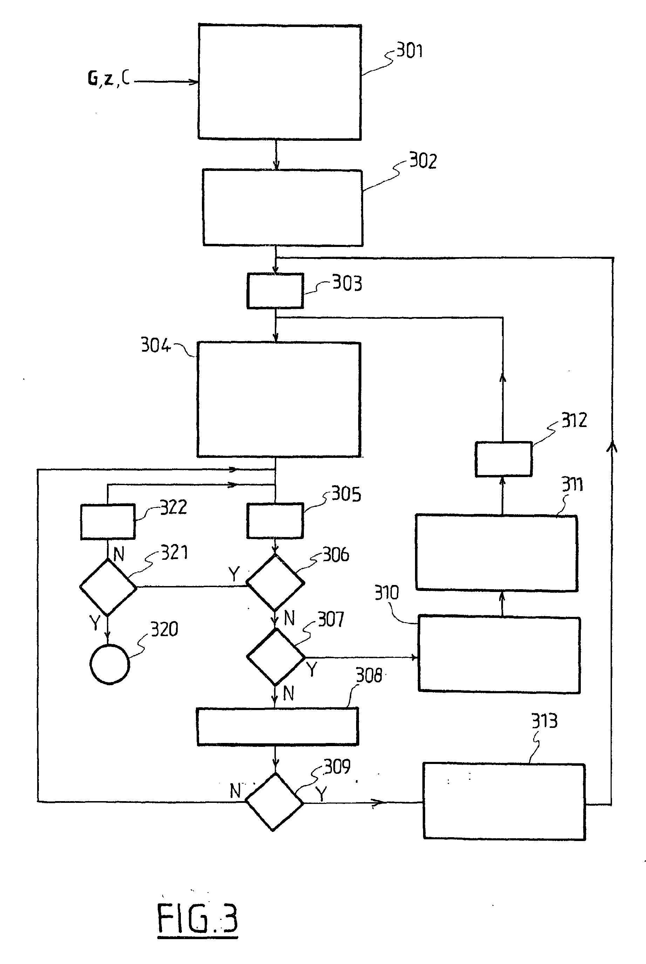

La Fig. 3 représente un organigramme de la recherche du plus proche voisin utilisée dans la méthode de détection par sphères selon l'invention.

Le vecteur **z,** la matrice **G,** la valeur initiale *C* sont les paramètres transmis à la méthode de recherche.

On supposera que l'on se trouve dans la situation où κ=2*K*, le cas simplifié κ=*K* s'en déduisant sans difficulté.

Dans une première étape 301, on procède à la factorisation de Cholesky de la matrice de Gram Γ=**GG**$^T$ si le vecteur z n'est pas issu d'un blanchiment (sinon la matrice **G** est, comme on l'a vu, déjà triangulaire inférieure). Les coefficients $q_{ij}$ sont calculés selon la relation (24) et les valeurs $\rho_k$ sont calculées par la relation : ρ**=zG**$^{-1}$.

On initialise à l'étape 302 la valeur quadratique de la plus petite distance courante à C : $D_{\min}^2 := C$ et on initialise le calcul récursif des bornes de recherche par : $T_\kappa = C$, $S_i = \rho_i$, *i*=1,..,κ. On détermine également les valeurs de bornes $M_i^-$, $M_i^+$ avec *i*=2*k*, *k*=1,..., *K* et l'on construit ensuite *K* tables donnant les valeurs $M_i^-$, $M_i^+$ avec *i*=2*k-1*, *k*=1,..,*K* correspondant aux différentes valeurs $b_{2k}$ possibles.

On initialise à l'étape 303 l'indice de la dimension de recherche, soit *i*=κ.

On calcule à l'étape 304 les valeurs $L_i^-$, $L_i^+$ grâce à la relation (32). On détermine $B_i^-$, $B_i^+$ grâce à la relation (33) si *i* est pair. Si *i* est impair on détermine $M_i^-$, $M_i^+$ à partir de la table (*i*+1)/2 et de la valeur de $b_{i+1}$. Les bornes $B_i^-$, $B_i^+$ sont ensuite déterminée selon la relation (33'). En outre, $b_i$ est initialisé à la valeur $B_i^- - 1$.

A l'étape 305 la valeur de $b_i$ est incrémentée de 1 : $b_i = b_i + 1$.

L'étape 306 consiste en un test : $b_i > B$ $b_i > B_i^+$ ?

Si le test en 306 est négatif on passe à l'étape 307 où l'on teste si *i*>1.

Si le test en 307 est positif on effectue le calcul de proche en proche des bornes de recherche. A l'étape 310 on calcule $T_{i-1} = T_i - q_{ii}(S_i - b_i)^2$ et $\xi_i = \rho_i - b_i$, puis, à l'étape 311 on calcule $S_{i-1} = \rho_{i-1} + \sum_{j=i}^{\kappa} q_{j,i-1}\xi_j$ .

On décrémente ensuite *i* en 312 avant de retourner à l'étape 304 pour calculer les bornes de recherche pour *i*-1.

Lorsque le test en 307 est négatif on passe à l'étape 308 pour calculer la norme quadratique $\|\mathbf{w}\|^2$ du vecteur

**w** relatif au point courant par $\|\mathbf{w}\|^2 = T_\kappa - Ti + q11(S_1 - b_1)^2$. On teste ensuite si $< \|\mathbf{w}\|^2 < D^2_{\min}$. Si ce n'est pas le cas on poursuit en 305. En revanche si la distance minimale est améliorée, on passe à l'étape 313 où l'on stocke les composantes $b_i$ du vecteur **x** correspondant à ce minimum. On met à jour la distance quadratique minimale par $D^2_{\min} = \|\mathbf{w}\|^2$ et la taille de la sphère de recherche par $T_\kappa = \|\mathbf{w}\|^2$. On recommence la procédure de recherche en retournant en 303.

Si le test en 306 est positif, c'est-à-dire si l'on atteint la borne supérieure de recherche pour la dimension courante, on teste en 321 si $i=\kappa$. Si c'est le cas, la recherche est terminée en 320 et le dernier vecteur **x** stocké est le plus proche voisin. En revanche si le test est négatif, la recherche se poursuit en incrémentant $i$ à l'étape 322 et en retournant à l'étape 305.

**Revendications**

1. Méthode de détection d'une pluralité de symboles $\mathbf{d}_k(i)$ transmis par ou pour une pluralité $K$ d'utilisateurs, chaque symbole appartenant à une constellation de modulation et faisant l'objet d'un étalement spectral par une séquence d'étalement, ladite méthode comprenant une étape de filtrage adapté pour fournir un vecteur réel **z** caractéristique dudit signal reçu ladite méthode comprenant en suite une étape de recherche dans laquelle le plus proche voisin dudit vecteur est recherché au sein d'un réseau de points ($\Xi$) généré par lesdites constellations de modulation, ladite recherche étant limitée à des vecteurs candidats **x** dont chacune des composantes $b_i$ possède une valeur comprise dans un intervalle de recherche défini par une borne inférieure $B_i^-$ et une borne supérieure $B_i^+$, ladite méthode **caractérisée en ce que** lesdites bornes sont choisies de manière à ce que chacun desdits intervalles ne comprenne que des valeurs de composantes de points situés à l'intérieur d'une sphère de rayon $\sqrt{C}$, prédéterminé et appartenant à une constellation de modulation.

2. Méthode de détection selon la revendication 1, **caractérisée en ce que**, pour une composante d'indice $i$ donné, chaque couple de bornes inférieure $B_i^-$ et supérieure, $B_i^+$ est calculé à partir d'une grandeur $T_i$ caractéristique de la largeur de l'intervalle de recherche pour ladite composante, cette grandeur caractéristique étant déterminée par récurrence sur l'indice $i$, la grandeur caractéristique $T_i$ pour un indice donné étant déterminée à partir de la grandeur d'indice précédent ($T_{i+1}$) et de la valeur d'une composante $b_{i+1}$ choisie dans l'intervalle de rechercher $[B_{i+1}^-, B_{i+1}^+]$, relatif à la composante d'indice précédent.

3. Méthode de détection selon la revendication 2, **caractérisée en ce que**, pour une composante de vecteur candidat d'indice $2k$ donné, la borne inférieure de l'intervalle de recherche est choisie supérieure au plus petit entier $(M_{2k}^-)$ correspondant à un symbole de la constellation de modulation ($\mathbf{A}_k$) et la borne supérieure de l'intervalle de recherche est choisie inférieure au plus grand entier $(M_{2k}^+)$ correspondant à un symbole de la constellation de modulation.

4. Méthode de détection selon la revendication 2, **caractérisée en ce que**, pour une première composante de vecteur candidat d'indice $2k$-1 donné, la borne inférieure de l'intervalle de recherche est choisie supérieure à un premier entier $(M_{2k-1}^-)$ et la borne supérieure de l'intervalle de recherche est choisie inférieure à un second entier $(M_{2k-1}^+)$, lesdits premier et second entiers étant déterminés à partir de la valeur d'une seconde composante $b_{2k}$ du vecteur candidat telle que la première et la seconde composantes soient relatives à un même utilisateur.

5. Méthode de détection selon la revendication 4, **caractérisée en ce que** lesdits premier et second entiers sont respectivement déterminés comme la plus petite valeur et la plus grande valeur de la première composante telle que le nombre complexe défini par la valeur de ladite première composante et la valeur de ladite seconde composante soit un symbole de la constellation de modulation dudit utilisateur.

6. Méthode de détection selon l'une des revendications précédentes, **caractérisée en ce que** la recherche du plus proche voisin est effectuée en balayant un à un lesdits intervalles de recherche pour les différents indices $i$ de composante et en choisissant dans chacun desdits intervalles une valeur de composante ($b_j$), les bornes de chaque intervalle étant déterminées en fonction de la largeur de l'intervalle d'indice précédent $i$+1 et de la valeur de composante $b_{i+1}$ choisie dans ce même intervalle.

7. Méthode de détection selon l'une des revendications précédentes, **caractérisée en ce que**, si, au cours de ladite recherche, la norme $\|\mathbf{w}\|$ d'un vecteur candidat est inférieure au rayon de ladite sphère, le rayon est mis à jour à la valeur de ladite norme.

**Claims**

1. Method of detecting a plurality of symbols $d_k(i)$ transmitted by or for a plurality $K$ of users, each symbol being associated with a modulation constellation and being the subject of a spectral spread by a spreading sequence, the said method including a filtering stage adapted to supply a real vector z characteristic of the said signal received, the said method including, therein, a search step in which the nearest neighbour of the said vector is searched for within a point network (E) generated by the said modulation constellations, the said search being limited to candidate vectors x, each of the components ($b_i$) of which has a value included in a search interval defined by a low delimiter (Bi⁻) and a high delimiter (Bi⁺), the said method is **characterised in that** the said delimiters are selected so as to ensure that each of the said intervals only includes the values of point components situated within a predetermined sphere of radius $\sqrt{C}$ and associated with a modulation constellation.

2. Method of detecting according to claim 1, **characterised in that**, for a component with a given index i, each pair of low delimiters Bi⁻ and each pair of high delimiters Bi⁺ is calculated from a magnitude $T_i$ characteristic of the width of the search interval for the said component, the said characteristic magnitude being determined by recurrence of the index i, the characteristic magnitude $T_i$ for a given index being determined from the magnitude of the preceding index $T_{i+1}$ and from the value of a component $b_{i+1}$ selected in the search interval [Bi⁻₊₁, Bi⁺₊₁] relating to the component with the preceding index.

3. Method of detecting according to claim 2, **characterised in that**, for a candidate vector component with the given index 2k, the low delimiter of the search interval is selected higher than the smallest integer (M⁻₂ₖ) corresponding to a symbol of the modulation constellation ($A_k$) and the high delimiter of the search interval is selected lower than the largest integer (M⁺₂ₖ) corresponding to a symbol of the modulation constellation.

4. Method of detecting according to claim 2, **characterised in that**, for a first candidate vector component with a given index 2k-1, the low delimiter of the search interval is selected higher than a first integer (M⁻₂ₖ₋₁) and the high delimiter of the search interval is selected lower than a second integer (M⁺₂ₖ₋₁), the said first and second integers being determined from the value of a second component $b_{2k}$ of the candidate vector such that the first and the second components are relative to a same user.

5. Method of detecting according to claim 4, **characterised in that** the said first and second integers are respectively determined as the smallest value and the largest value of the first component such that the complex number defined by the value of the said first component and the value of the said second component is a symbol of the modulation constellation of the said user.

6. Method of detecting according to one of the preceding claims, **characterised in that** the search of the nearest neighbour is effected by scanning the said search intervals one by one for the different component indices i and by selecting in each of the said intervals a component value $b_i$, the delimiters of each interval being determined as a function of the width of the interval of the preceding index i + 1 and of the value of the component $b_{i+1}$ selected in the said same interval.

7. Method of detecting according to one of the preceding claims, **characterised in that**, if, during the said search, the standard $\|w\|$ of a candidate vector is less than the radius of the said sphere, the radius is updated to the value of the said standard.

**Patentansprüche**

1. Verfahren zur Detektion mehrerer Symbole $d_k(i)$, die durch oder für eine Vielzahl von K Benutzern übertragen werden, wobei jedes Symbol zu einer Modulationskonstellation gehört und eine spektrale Spreizung durch eine Spreizfolge erfährt, wobei das Verfahren einen Filterungsschritt umfasst, der dazu geeignet ist, einen realen Vektor z zu liefern, der für das empfangene Signal charakteristisch ist, wobei das Verfahren danach einen Suchschritt umfasst, in dem der nächste Nachbar des Vektors in einem Netz von Punkten Ξ gesucht wird, das durch die Modulationskonstellationen erzeugt wird, wobei die Suche auf Kandidatenvektoren x beschränkt ist, von denen jede der Komponenten $b_i$ einen Wert hat, der in einem Suchintervall enthalten ist, das durch eine untere Grenze $B_i^-$ und eine obere Grenze $B_i^+$ bestimmt ist, wobei das Verfahren **dadurch gekennzeichnet ist, dass** die Grenzen derart gewählt werden, dass jedes der Intervalle nur Werte von Komponenten von Punkten umfasst, die sich innerhalb einer vorbestimmten Radiussphäre $\sqrt{C}$ befinden und einer Modulationskonstellation angehören.

2. Detektionsverfahren nach Anspruch 1, **dadurch gekennzeichnet, dass** für eine gegebene Indexkomponente i jedes Paar von unteren $B_i^-$ und oberen Grenzen $B_i^+$ ausgehend von einer Größe $T_i$ berechnet wird, die für die Breite des Suchintervalls für diese Komponente charakteristisch ist, wobei diese charakteristische Größe durch Rekursion auf den Index i bestimmt wird, wobei die charakteristische Größe $T_i$ für einen gegebenen Index ausgehend von einer vorhergehenden Indexgröße $T_{i+1}$ und dem Wert einer Komponente $b_{i+1}$ bestimmt wird, die im Suchintervall $\left[ B_{i+1}^-, B_{i+1}^+ \right]$, das die vorhergehende Indexkomponente betrifft, gewählt wird.

3. Detektionsverfahren nach Anspruch 2, **dadurch gekennzeichnet, dass** die untere Grenze des Suchintervalls für eine Komponente des gegebenen Indexkandidatenvektors 2k größer als die kleinste ganze Zahl $\left( M_{2k}^- \right)$ gewählt wird, die einem Symbol der Modulationskonstellation ($A_k$) entspricht, und die obere Grenze des Suchintervalls kleiner als die größte ganze Zahl $\left( M_{2k}^+ \right)$ gewählt wird, die einem Symbol der Modulationskonstellation entspricht.

4. Detektionsverfahren nach Anspruch 2, **dadurch gekennzeichnet, dass** die untere Grenze des Suchintervalls für eine erste Komponente des gegebenen Indexkandidatenvektors 2k-1 größer als eine erste ganze Zahl $\left( M_{2k-1}^- \right)$ gewählt wird und die obere Grenze des Suchintervalls kleiner als eine zweite ganze Zahl $\left( M_{2k-1}^+ \right)$ gewählt wird, wobei die erste und die zweite ganze Zahl ausgehend von dem Wert einer zweiten Komponente $b_{2k}$ des Kandidatenvektors derart bestimmt werden, dass die erste und die zweite Komponente einen gleichen Benutzer betreffen.

5. Detektionsverfahren nach Anspruch 4, **dadurch gekennzeichnet, dass** die erste und die zweite ganze Zahl als der kleinste beziehungsweise der größte Wert der ersten Komponente derart bestimmt werden, dass die komplexe Zahl, die durch den Wert der ersten Komponente bestimmt wird, und der Wert der zweiten Komponente ein Symbol der Modulationskonstellation des Benutzers sind.

6. Detektionsverfahren nach einem der vorhergehenden Ansprüche, **dadurch gekennzeichnet, dass** die Suche des nächsten Nachbarn durch Abtasten eines der Suchintervalle für die unterschiedlichen Komponentenindizes i und durch Wählen eines Komponentenwerts ($b_i$) in jedem der Intervalle ausgeführt wird, wobei die Grenzen von jedem Intervall als Funktion der Breite des vorhergehenden Indexintervalls i+1 und des in diesem gleichen Intervall gewählten Komponentenwerts $b_{i+1}$ bestimmt werden.

7. Detektionsverfahren nach einem der vorhergehenden Ansprüche, **dadurch gekennzeichnet, dass** dann, wenn die Norm $\|w\|$ eines Kandidatenvektors im Laufe der Suche kleiner als der Radius der Sphäre ist, der Radius mit dem Wert der Norm aktualisiert wird.

FIG.1

$$\underline{\text{FIG.2}}$$

**G,z,C** → 301

302

303

304

322 305

321 N 306 Y

Y N 307

320 Y

N

308

312

311

310

313

309 N Y

FIG.3

FIG.4

## RÉFÉRENCES CITÉES DANS LA DESCRIPTION

**Littérature non-brevet citée dans la description**

- **S. VERDU.** Minimum probability of error for asynchronous Gaussian multiple access channels. *IEEE Transactions on Information Theory,* Janvier 1986, 85-96

- **L. BRUNEL et al.** Euclidian space lattice decoding for joint detection in CDMA system. *Proceedings of ITW,* Juin 1999, 129
- **VITERBO E. et al.** A Universel Lattice Code Decoder for Fading Channels. *IEEE Transactions on Information Theory,* Juillet 1999, vol. 45 (5), 1639